# EUROPEAN PATENT SPECIFICATION

(11) **EP 3 131 034 B1**
(45) Date of publication and mention of the grant of the patent: **14.10.2020**
(21) Application number: 16001461.9
(22) Date of filing: 30.06.2016
(51) Int. Cl.: G06K 7/10

(54) **HOUSING FOR AN RFID ANTENNA**
GEHÄUSE FÜR EINE RFID-ANTENNE
BOÎTIER POUR ANTENNE RFID

(30) Priority: 03.08.2015 BE 201500190
(43) Date of publication of application: 15.02.2017
(73) Proprietor: Van de Vliet, Ronny, 2300 Turnhout (BE); Van de Vliet A.E., besloten vennootschap met Beperkte aansprakelijkheid, 2300 Turnhout (BE)
(72) Inventor: Van de Vliet, Ronny, B - 2300 Turnhout (BE)
(74) Representative: Donné, Eddy

(56) References cited:
- WO-A1-95/29456
- WO-A1-2004/039699
- Anonymous: "RFMAX Weatherproof RFID Reader Enclosure - atlasRFIDstore", , 25 July 2015 (2015-07-25), XP055260915, Retrieved from the Internet: URL:https://web.archive.org/web/2015072522 1954/http://www.atlasrfidstore.com/rfmax-w eatherproof-rfid-reader-enclosure/ [retrieved on 2016-03-24]

## Description

The present invention relates to a housing for an antenna or antennas of an RFID system, specifically for industrial applications.

RFID stands for 'Radio Frequency Identification' or identification with radio waves, which is a system for reading information on a chip or 'RFID tag' with a reader or 'RFID reader', which comprises an RFID antenna that sends and receives radio waves.

More specifically, the invention is intended for a housing of an antenna of an RFID system, which is built-in or integrated in a loading system, such as for example a garbage truck, that has to recognise, lift and/or empty receptacles, such as (waste) containers for example.

The RFID system is set up such that the receptacle contains the chip with a unique code and any additional information that is linked to the owner and/or the material in the receptacle. The loading system comprises the reader with antenna, whereby the antenna housing is integrated in the loading system.

By bringing the antenna in the vicinity of the chip, the chip can be read in the known way.

Such a loading system as well as the receptacles and location of the chip in the receptacles are standardised (DIN). This means that the antenna housing must satisfy the (DIN) standard with regard to the dimensions.

Moreover, it must be suitable for withstanding rough working conditions with regard to the force, shaking, moisture and effects of chemicals, as the housing is integrated in the loading system, which means the housing will 'hook up' the receptacle and be lifted with it.

As a result of this the housing is exposed to large forces during the lifting of the receptacle and the shaking during emptying of the receptacle if dirt or other material remains stuck to the receptacle.

Moisture and chemicals can also be present in the receptacle and come into contact with the housing. Different qualities, strengths and durabilities of such housings are already known for different antennas with different recognition frequencies.

There exist housings which consist of a box which is closed off by means of a lid, whereby inside the box an antenna can be placed. Such housings are usually not suitable for use on a loading system as the dimensions are not DIN standardized. Further, because the housing is made out of a box with a lid, moisture and chemicals can leak between the box and the lid and can come in contact with the antenna.

Although the location of the chip is quite well standardised, the type of chip is less standardised. This means that multiple types with different frequencies, different reading and/or writing methods, or different read distances from different producers are used all mixed up together.

Over the course of time, due to sales of different receptacles with different chip specifications for the same customer, a problem arises in that not every housing of this customer is equipped with the right antenna to be able to read every chip.

This means that the RFID antenna on the loading system might not be able to read every chip because the characteristics or specifications of the antenna do not correspond to those of the chip on the receptacle.

Another disadvantage is that the Industrial Protection Rating (IP) of the known housings leaves something to be desired, both for the durability and resistance to chemicals.

This is due to the fact that the housing consists of a number of parts. The antenna coil is 'packed in' as it were by connecting the different parts of the housing around the antenna together.

The aforementioned parts of the housing are connected together at the level of the antenna coil. This ensures a weak spot in the housing and a location where the easy ingress of foreign (liquids) substances is possible.

The housing is traditionally made of plastic, as metal or magnetic materials in the vicinity of the antenna can reduce or interfere with the read range.

In order to be able to fasten the housing to the loading system, bushes are pressed in cavities provided in the housing to this end.

The housing must be sufficiently thick for this to be able to mount the bushes, and as the total dimensions of the housing are standardised and thus fixed, less space remains for the antenna so that large antennae often do not fit.

Moreover, due to the large forces that are on these bushes during the lifting of the receptacles, these bushes often come loose from the cavities such that the housing can become detached from the loading system.

That is why some conventional housings are (partially) made of metal so that the fastening can be realised by the metal sections of the housing. This has the disadvantage that the metal sections reduce the read range.

The purpose of the present invention is to provide a solution to at least one of the aforementioned and other disadvantages.

The subject of the present invention is a housing for an antenna or antennas according to claim 1.

An advantage is that the housing is much sturdier as it consists of one whole part. This means that the housing can be exposed to large forces without problems when hooking up receptacles.

Another advantage is that as a result the housing is better protected against the ingress of foreign (liquids) substances or objects.

In a preferred embodiment the aforementioned mounting opening and the aforementioned underside are suitable for fastening the housing on or against a loading system.

This has the advantage that the mounting opening, i.e. the sole opening in the housing, when fastening or mounting on the loading system is closed as it were by the loading system.

Preferably the housing is provided with mounting clamps or mounting clamp components which can at least be partially inserted in the chamber via the mounting opening and which ensure the fastening of the housing with its underside on or against a loading system.

Mounting clamps here mean clamps made of one complete part or can consist of a number of parts, and mounting clamp components are the different components of mounting clamps of a number of parts.

By making use of the mounting clamps or mounting clamp components that are partially inserted in the chamber to be able to clamp the housing to the loading system, the use of pressed bushes in the housing for the fastening thereof is avoided.

The mounting: clamps or mounting clamp components will be partially located in the housing and partially outside the housing such that they do not occupy much space in the chamber, and the chamber can be made as large as possible to provide space for large antennae that have a longer read distance in order to be able to house different types of antennae for different reading frequencies together, such as for example 'Printed Circuit Board', air coil, ferrite coil, or to mount different antennae at different angles to obtain the broadest possible read and write range without the dimensions of the housing departing from the standardised requirements.

An advantage is that many different types of chips can be read with the RFID reader so that the probability that the RFID reader on the loading system cannot read the chip of a receptacle is as good as non-existent.

In a practical embodiment the chamber and the mounting opening are designed such that they define one or more clamping surfaces on which the mounting clamp or mounting clamp components can engage.

In other words: the mounting opening is smaller than the cross-section of the chamber parallel to the underside of the housing.

In a preferred embodiment the mounting clamps or mounting clamp components are only provided at the location of the underside of the housing.

As the mounting clamps or mounting clamp components are preferably made of metal to obtain a robust mounting of the housing, this has the advantage that the read range of the antenna or antennae are not limited or reduced because the antenna is incorporated in a completely plastic housing.

Preferably the mounting clamp or mounting clamp components are designed such that their shape is complementary to the housing chamber.

As a result they can be held as it were with a good fit in the chamber, which fosters the sturdiness.

With the intention of better showing the characteristics of the invention, a few preferred embodiments of a housing for an antenna or antennae of an RFID system according to the invention are described hereinafter by way of an example, without any limiting nature, with reference to the accompanying drawings, wherein:
figure 1 schematically shows a perspective view of a garbage truck with a loading system with a housing for an RFID antenna according to the invention;
figure 2 schematically shows a perspective view of the section indicated by F2 in figure 1;
figure 3 schematically shows a perspective view of a housing for an RFID antenna according to the invention, but in an exploded state;
figure 4 schematically shows a view according to the arrow F4 in figure 3;
figure 5 schematically shows a view according to the arrow F5 in figure 4;
figure 6 schematically shows a cross-section according to the line VI-VI in figure 3.

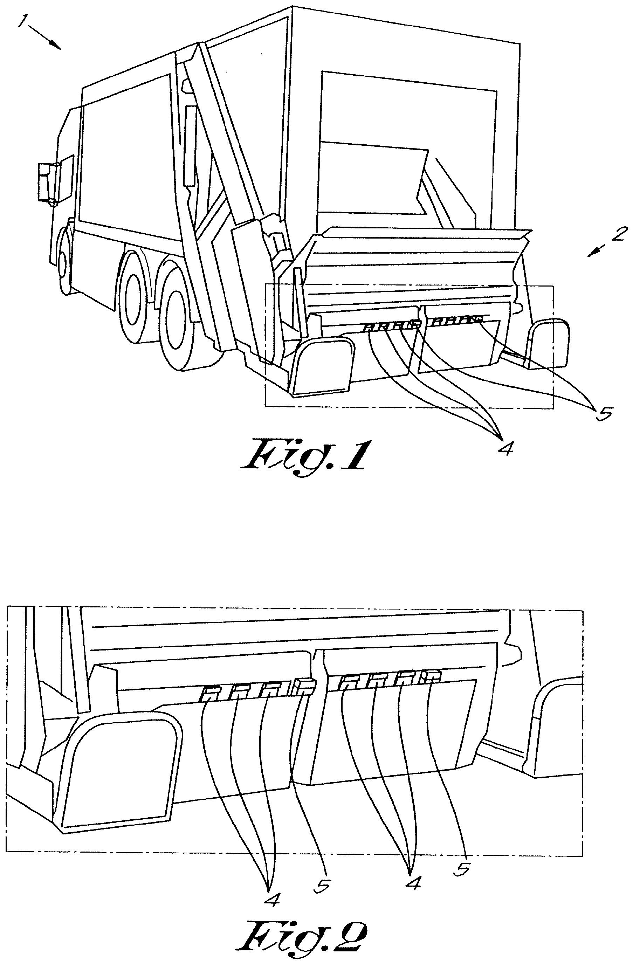

The garbage truck 1 schematically shown in figure 1 is provided with a loading system 2.

As is known using such a loading system 2, receptacles, for example containers, can be hooked up and lifted up. Then the receptacles can be tipped over and emptied into the garbage truck 1, after which the empty receptacles are put down again.

In the example shown two (smaller) receptacles can be hooked up simultaneously or one larger one.

The receptacles are standardised with regard to dimensions and are provided with an RFID chip that contains information on the owner of the receptacle, the content, etc.

Due to the aforementioned standardisation, this RFID chip is placed in the receptacle at a standardised location, which means that this location is fixed for all receptacles.

The loading system 2 is provided with an RFID reader with an antenna 3 that can read this chip. In order to be able to read the chip it has to be in the read field of the RFID reader.

As can be seen in figure 2, the loading system 2 comprises a number of hook-up points 4 that have standardised dimensions, in order to be able to hook up the standardised receptacles.

One of these for hook-up points is provided with a housing 5 according to the invention, whereby this housing 5 will contain the antenna 3 of the RFID reader.

Not only the shape of the housing 5, but also the location of the housing 5 and thus the antenna 3 on the loading system 2 is standardised, so that it is ensured that the chip is in the read field of the RFID reader when the receptacle is hooked up.

The production of this housing 5 starts with a block of plastic material, such as ertalon® for example or a similar sturdy and hard-wearing material, which through different machining operations is converted into the standardised well defined form of the housing 5 for the antennae 3.

It is of course not excluded that the housing 5 is produced by means of 3D printing, injection moulding in a mould and/or a combination of machining operations with 3D printing or injection moulding in a mould.

The block of non-magnetic plastic material is worked externally until the external form has the precise form of the final housing 5.

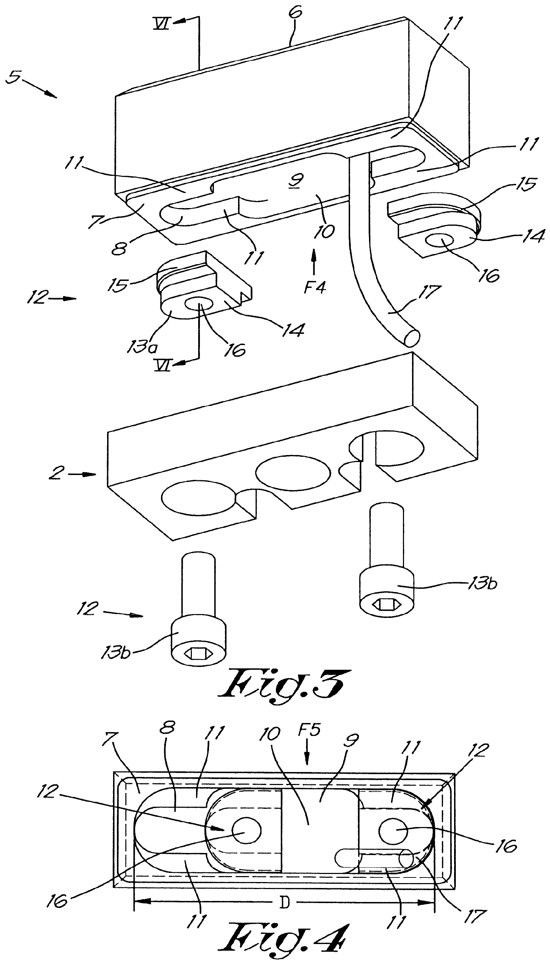

Figures 3 to 6 show the design of the housing 5.

The top 6, also called the reading surface, of the housing 5 is the side that is oriented upwards, i.e. that is oriented towards the receptacle and thus towards the chip. The chip to be read can thus be at the level of the entire reading surface and in the near vicinity of it, thus partly outside the reading surface.

The further processing of the block of plastic material is only done on the opposite side of the reading surface, i.e. on the underside 7 of the housing 5, also called the mounting side, with which the housing 5 is mounted on the loading system 2.

By means of machining, a channel 8 is made on the underside 7 of the housing 5 up to a depth A such that at the location of the reading surface 6 there is a residual surface with a thickness B.

By using a different machining tool a chamber 9 is made by further hollowing out the aforementioned channel 8 in such a way that the thickness B of the residual plane is preserved, whereby the walls preserve a thickness C to ensure sufficient mechanical sturdiness and that there is also sufficient space to mount one or more antennae 3.

The channel 8 will finally be formed into the mounting opening 10, as shown in figures 2 and 3.

Except for the aforementioned mounting opening 10, the housing 5 is free of further openings.

By correctly selecting the ratio of the channel 8 to the chamber 9 four clamping surfaces 11 occur that can be used to fasten the housing 5 to the loading system 2. This is also shown in figures 3 to 6. It is clear that the number of clamping surfaces 11 can be more or less than four, for example two clamping surfaces 11.

An antenna 3 or a number of types of antennas 3 can be inserted in the chamber via the mounting opening 10.

Hereby the length D of the channel 8 is chosen such that the largest antenna 3 with a length equal to the length D of the chamber 8, can be inserted in the chamber 9 tilted at ninety degrees. This means on the narrow side of the antenna 3. If the antenna 3 is inserted far enough, deeper than the height E of the channel 8, the antenna 3 can be tilted ninety degrees in the chamber 9 and positioned optimally with respect to the reading surface 6. Note that the height E of the channel 8 corresponds to the thickness of the clamping surfaces 11.

Due to the application of the above method, the antenna section of the housing 5 consists of one part that is only open on the underside 7 for the mounting of the antenna 3 or antennas 3, and can be efficiently closed by filling with a potting component such as resin or similar through the aforementioned mounting opening 10, also called potting. This potting component is introduced after the antenna 3 or antennas 3 and the mounting clamp components have been provided in the chamber 9 of the housing 5.

The underside 7 of the housing 5 is fastened above on the loading system 2, as can be seen in figure 2, such that a very good industrial protection rating is obtained.

In order to realise this assembly, use is made of one or more mounting clamps 12 or mounting clamp components 13a, 13b. They can be made of different types of materials, magnetic metals or otherwise, as well as some plastics for certain applications. They must be strong and must be able to be provided with reliable fastening such as a screw thread for example.

Figures 3 to 6 show a possible embodiment, whereby it concerns mounting clamps 12 that consist of a number of engaging parts or mounting clamp components 13a, 13b.

In this case two mounting clamps 12 are used to fasten the housing 5 to the loading system 2.

As can be seen in figure 3, the mounting clamp 12 in the example shown is composed of two parts, 13a and 13b.

The first part 13a is a T-shaped type whereby the narrowest part 14 of the mounting clamp 12 fits in the channel 8 and the height of this narrowest part 14 is somewhat smaller than the height E of the channel 8 and whose wider part 15 fits in the chamber 9. In this case the shape of this wider part 15 is complementary to the shape of the chamber 9.

Figure 4 schematically shows how the first part 13a is provided. The first part 13a is put in the chamber 9 via the mounting opening 10 and then moved sideways so that it is situated at the location of the clamping surfaces 11, with the wider part 15 in the chamber 9.

This first part 13a also comprises a screw thread 16, whereby the second part 13b is a bolt that can be screwed in the screw thread 16 of the mounting clamp 12.

By screwing down the bolts 13b in the screw thread 16 of the mounting clamps 12, the housing 5 can be screwed or pressed against the loading system 2 by means of the clamping surfaces 11.

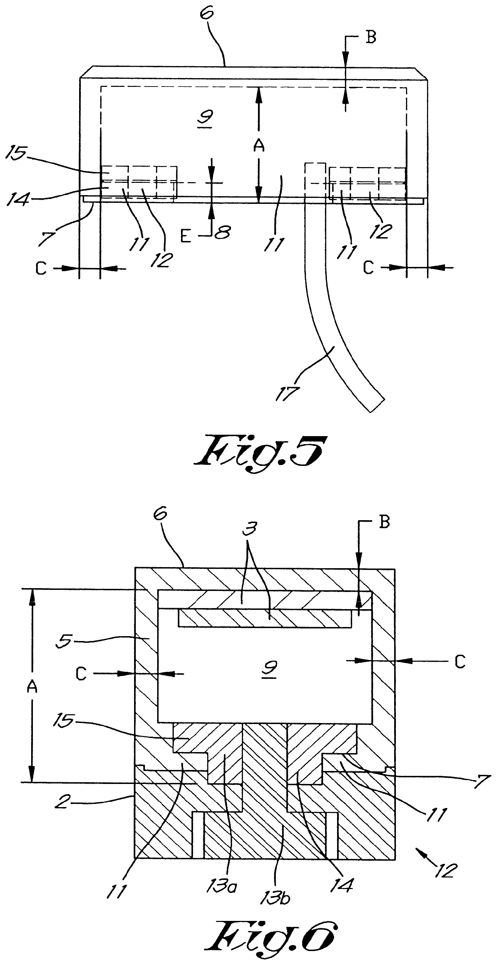

As can be seen in figures 5 and 6, the clamping surfaces 11 will be clamped between the aforementioned wider part 15 and the loading system 2.

Figures 3 to 6 also schematically show the electric cable 17 that will supply the antennae 3 with the necessary power.

As a result of the application of such a principle with mounting clamps 12 to fasten the housing 5 on the loading system 2, the chamber 9 can be made relatively large in proportion to the housing 2 as no bushes or similar have to be provided in the housing 2 for the fastening.

Due to the large chamber 9, there is the possibility to mount different antennas 3 of different types with different frequencies in different ways. Another possibility for example is to mount two antennas 3 of the same type at a different angle and to address them in turns by means of existing switcher technology and thus to obtain an adjustable read range or read field. A further variant of this is two antennas 3 built in to read the same type of chip but with a different antenna characteristic, whereby the one has a wide read field that does not extend so far and the other antenna has a narrower read field that extends further. A number of variants are conceivable here, such as switching in turns between antennas 3 with different frequencies, etc.

Because the housing 5 can be made of plastic, and the only, possibly magnetic, metal components are the mounting clamps 12 or mounting clamp components 13a, 13b, which are only on the underside 7, the influence on the upwards and sideways read distance of the antenna is very small.

This means that a sturdy fastening of the housing 5 can be obtained, without the read distance or read range of the antenna being impeded.

All components are mounted in the housing 5 using a tool that keeps the antenna 3 or antennas 3, the wiring 17, the mounting clamp 12 or mounting clamps 12, etc, in the right place, so that a 'potting component' can be poured in via the mounting opening 10 (channel) that will ensure the seal and permanently keep the different components in place, after which the tool can be removed.

The present invention is by no means limited to the embodiments described as an example and shown in the drawings, but a housing for an antenna or antennas of an RFID system according to the invention can be realised in all kinds of forms and dimensions, without departing from the scope of the invention.

## Claims

1. A housing (5) for an antenna (3) or antennas (3) of an RFID system, whereby this housing (5) defines a chamber (9) in which the antenna (3) or antennas (3) can be provided, **characterised in that** at least the section of the housing (5) that defines the chamber (9) consists of one whole part, whereby the housing (5) is provided with one single mounting opening (10) on the underside (7) of the housing (5) that provides access to the chamber (9), whereby the underside (7) is suitable to be provided against or on a loading system (2) for recognizing, lifting and/or emptying receptacles.

2. Housing according to claim 1, **characterised in that** the aforementioned mounting opening (10) and the aforementioned underside (7) are suitable for fastening the housing (5) on or against a loading system (2).

3. Housing according to claim 1 or 2, **characterised in that** the housing (5) is provided with mounting clamps (12) or mounting clamp components (13a, 13b) that can be at least partially inserted in the chamber (9) via the mounting opening (10) and which ensure the fastening of the housing (5) with its underside (7) on or against a loading system (2).

4. Housing according to claim 3, **characterised in that** the underside (7), the chamber (9) and the mounting opening (10) are designed such that they define one or more clamping surfaces (11) on which the mounting clamp (12) or mounting clamp components (13a, 13b) can engage.

5. Housing according to claim 3 or 4, **characterised in that** the mounting clamps (12) or mounting clamp components (13a, 13b) are designed such that their shape is complementary to the chamber (9) of the housing (5).

6. Housing according to any one of the previous claims 3 to 5, **characterised in that** the mounting clamps (12) or mounting clamp components (13a, 13b) are only provided at the location of the underside (7) of the housing (5).

7. Housing according to any one of the previous claims, **characterised in that** the housing (5) is made of a non-magnetic material, such as plastic, and that the housing can be obtained by machining from a block, by printing by means of a 3D printer or by injection moulding in a mould.

8. Housing according to any one of the previous claims, **characterised in that** an antenna (3) or a number of types of antennas (3) can be inserted in the chamber (9) via the mounting opening (10).

9. Housing according to any one of the previous claims, **characterised in that** the housing (5), except for the mounting opening (10), is free of further openings.

10. Housing according to any one of the previous claims, **characterised in that** the chamber (9) of the housing (5) is filled with a potting component, such as resin or similar, via the aforementioned mounting opening (10), after the antenna (3) or antennas (3) and mounting clamp components (13a, 13b) have been provided in the chamber (9) of the housing (5).

## Patentansprüche

1. Gehäuse (5) für eine Antenne (3) oder Antennen (3) eines RFID-Systems, wobei dieses Gehäuse (5) eine Kammer (9) definiert, in der die Antenne (3) oder die Antennen (3) bereitgestellt werden können,
**dadurch gekennzeichnet, dass**
wenigstens der Bereich des Gehäuses (5), der die Kammer (9) definiert, aus einem ganzen Teil besteht, wodurch das Gehäuse (5) mit einer einzigen Montageöffnung (10) an der Unterseite (7) des Gehäuses (5) versehen ist, die einen Zugang zu der Kammer (9) bereitstellt, wobei die Unterseite (7) dazu geeignet ist, gegen oder an einem Ladesystem (2) zum Erkennen, Anheben und/oder Entleeren von Behältern bereitgestellt zu werden.

2. Gehäuse nach Anspruch 1, **dadurch gekennzeichnet, dass** die vorgenannte Montageöffnung (10) und die vorgenannte Unterseite (7) zum Anbringen des Gehäuses (5) an oder gegen einem Ladesystem (2) geeignet sind.

3. Gehäuse nach Anspruch 1 oder 2, **dadurch gekennzeichnet, dass** das Gehäuse (5) mit Montageklemmen (12) oder Montageklemmenkomponenten (13a, 13b) versehen ist, die über die Montageöffnung (10) wenigstens teilweise in die Kammer (9) eingeführt werden können und die das Anbringen des Gehäuses (5) mit seiner Unterseite (7) an oder gegen einem Ladesystem (2) sicherstellen.

4. Gehäuse nach Anspruch 3, **dadurch gekennzeichnet, dass** die Unterseite (7), die Kammer (9) und die Montageöffnung (10) derart ausgelegt sind, dass sie eine oder mehrere Klemmoberflächen (11) definieren, auf denen die Montageklemme (12) oder die Montageklemmkomponenten (13a, 13b) eingreifen können.

5. Gehäuse nach Anspruch 3 oder 4, **dadurch gekennzeichnet, dass** die Montageklemmen (12) oder die Montageklemmenkomponenten (13a, 13b) derart ausgelegt sind, dass ihre Gestalt zu der Kammer (9) des Gehäuses (5) komplementär ist.

6. Gehäuse nach einem der vorhergehenden Ansprüche 3 bis 5, **dadurch gekennzeichnet, dass** die Montageklemmen (12) oder die Montageklemmenkomponenten (13a, 13b) nur an der Lage der Unterseite (7) des Gehäuses (5) bereitgestellt sind.

7. Gehäuse nach einem der vorhergehenden Ansprüche, **dadurch gekennzeichnet, dass** das Gehäuse (5) aus einem nichtmagnetischen Material, wie etwa Kunststoff, besteht und dass das Gehäuse durch maschinelles Bearbeiten aus einem Block, durch Drucken mittels eines 3D-Druckers oder durch Spritzgießen in eine Form hergestellt werden kann.

8. Gehäuse nach einem der vorhergehenden Ansprüche, **dadurch gekennzeichnet, dass** eine Antenne (3) oder eine Anzahl von Antennenarten (3) über die Montageöffnung (10) in die Kammer (9) eingeführt werden kann.

9. Gehäuse nach einem der vorhergehenden Ansprüche, **dadurch gekennzeichnet, dass** das Gehäuse (5), mit Ausnahme von der Montageöffnung (10), über keine weitere Öffnungen verfügt.

10. Gehäuse nach einem der vorhergehenden Ansprüche, **dadurch gekennzeichnet, dass** die Kammer (9) des Gehäuses (5) über die vorgenannte Montageöffnung (10) mit einem Vergussstoff, wie etwa Harz oder ähnlichem, gefüllt wird, nachdem die Antenne (3) oder die Antennen (3) und die Montageklemmkomponenten (13a, 13b) in der Kammer (9) des Gehäuses (5) bereitgestellt worden sind.

## Revendications

1. Boîtier (5) destiné à une antenne (3) ou à des antennes (3) d'un système RFID, dans lequel ce boîtier (5) définit une chambre (9) dans laquelle l'antenne (3) ou les antennes (3) peut/peuvent être prévue(s), **caractérisé en ce qu'**au moins le tronçon du boîtier (5) qui définit la chambre (9) est constitué d'une pièce entière ; dans lequel le boîtier (5) est équipé d'une ouverture de montage unique (10) sur le côté inférieur (7) du boîtier (5), qui fournit un accès à la chambre (9), dans lequel le côté inférieur (7) est approprié pour être prévu contre ou sur un système de chargement (2) destiné à la reconnaissance, au soulèvement et/ou au vidage de récipients.

2. Boîtier selon la revendication 1, **caractérisé en ce que** l'ouverture de montage (10) qui a été mentionnée ci-dessus et le côté inférieur (7) qui a été mentionné ci-dessus sont appropriés pour la fixation du boîtier (5) sur ou contre un système de chargement (2).

3. Boîtier selon la revendication 1 ou 2, **caractérisé en ce que** le boîtier (5) est équipé de pinces de montage (12) ou de composants (13a, 13b) faisant office de pinces de montage qui peuvent être insérés au moins en partie dans la chambre (9) en passant par l'ouverture de montage (10) et qui garantissent la fixation du boîtier (5) avec son côté inférieur (7) sur ou contre un système chargement (2).

4. Boîtier selon la revendication 3, **caractérisé en ce que** le côté inférieur (7), la chambre (9) et l'ouverture de montage (10) sont conçus d'une manière telle qu'ils définissent une ou plusieurs surfaces de serrage (11) avec lesquelles la pince de montage (12) ou les composants (13a, 13b) faisant office de pinces de montage peuvent entrer en contact.

5. Boîtier selon la revendication 3 ou 4, **caractérisé en ce que** les pinces de montage (12) ou les composants (13a, 13b) faisant office de pinces de montage sont conçus d'une manière telle que leur configuration est complémentaire à celle de la chambre (9) du boîtier (5).

6. Boîtier selon l'une quelconque des revendications précédentes 3 à 5, **caractérisé en ce que** les pinces de montage (12) ou les composants (13a, 13b) faisant office de pinces montage sont uniquement prévus à l'endroit occupé par le côté inférieur (7) du boîtier (5).

7. Boîtier selon l'une quelconque des revendications précédentes, **caractérisé en ce que** le boîtier (5) est constitué d'une matière amagnétique telle qu'une matière plastique et **en ce que** le boîtier peut être obtenu par usinage à partir d'un bloc, par impression au moyen d'une imprimante 3D ou par l'intermédiaire d'un moulage par injection dans un moule.

8. Boîtier selon l'une quelconque des revendications précédentes, **caractérisé en ce que** l'antenne (3) ou un certain nombre de types d'antennes (3) peuvent être insérés dans la chambre (9) en passant par l'ouverture de montage (10) .

9. Boîtier selon l'une quelconque des revendications précédentes, **caractérisé en ce que** le boîtier (5), à l'exception de l'ouverture de montage (10), est exempt d'ouvertures supplémentaires.

10. Boîtier selon l'une quelconque des revendications précédentes, **caractérisé en ce que** la chambre (9) du boîtier (5) est remplie avec un composant de scellement, tel qu'une résine ou analogue, en passant par l'ouverture de montage (10) qui a été mentionné ci-dessus, après que l'antenne (3) ou les antennes (3) et les composants (13a, 13b) faisant office de pinces de serrage ont été procurés dans la chambre (9) du boîtier (5) .
